# FASCICULE DE BREVET EUROPEEN

(11) **EP 3 192 158 B1**
(45) Date de publication et mention de la délivrance du brevet: **19.06.2019**
(21) Numéro de dépôt: 15771679.6
(22) Date de dépôt: 10.09.2015
(51) Int. Cl.: H02M 3/335, H02M 3/337, H02M 1/38

(54) **PROCEDE DE COMMANDE D'UN CHARGEUR DE BATTERIE A CONVERTISSEUR CC-CC A RESONANCE SERIE**
VERFAHREN ZUR STEUERUNG EINES BATTERIELADEGERÄTS MIT GLEICHSTROM-GLEICHSTROM-SERIENRESONANZWANDLER
METHOD FOR CONTROLLING A BATTERY CHARGER HAVING DC-DC SERIES RESONANT CONVERTER

(30) Priorité: 11.09.2014 FR 1458535
(43) Date de publication de la demande: 19.07.2017
(73) Titulaire: Renault S.A.S., 92100 Boulogne-Billancourt (FR)
(72) Inventeur: MAZZOLA, Walter, 78580 Herbeville (FR)
(86) Numéro de dépôt international: PCT/FR2015/052409
(87) Numéro de publication internationale: WO 2016/038304

(56) Documents cités:
- FR-A1- 3 001 091
- US-A1- 2002 054 498
- KHALIGH A ET AL: "Comprehensive Topological Analysis of Conductive and Inductive Charging Solutions for Plug-In Electric Vehicles", IEEE TRANSACTIONS ON VEHICULAR TECHNOLOGY, IEEE SERVICE CENTER, PISCATAWAY, NJ, US, vol. 61, no. 8, 1 octobre 2012 (2012-10-01), pages 3475-3489, XP011481314, ISSN: 0018-9545, DOI: 10.1109/TVT.2012.2213104

## Description

La présente invention se rapporte de manière générale au domaine de l'électrotechnique et concerne plus précisément un procédé de commande d'un chargeur pour batterie, utilisable notamment dans un véhicule électrique pour commander la charge d'une batterie de traction d'un tel véhicule.

Afin de rendre accessible à tous la mobilité durable, il est nécessaire de développer des véhicules électriques peu coûteux et rechargeables sur le réseau électrique domestique. De tels véhicules ont préférentiellement un chargeur de batterie de traction fonctionnant à faible puissance, limitée notamment à 7kW lorsqu'il est connecté à un réseau alternatif monophasé.

Parmi les architectures de chargeur possibles, on distingue d'une part les chargeurs utilisant un transformateur d'isolation galvanique entre le réseau électrique d'alimentation externe et le véhicule à charger, dits chargeurs isolés, et d'autre part les chargeurs non isolés du réseau électrique externe. Les chargeurs isolés sont préférés pour la simplicité de la gestion de la sécurité électrique lors de la charge d'un véhicule électrique intégrant un tel chargeur isolé, en contrepartie d'un léger surcoût et d'un volume supplémentaire à prévoir du fait de l'intégration dans le chargeur d'un transformateur d'isolation galvanique.

La demande de brevet français FR3001091 décrit un chargeur isolé pour véhicule électrique adapté à une charge lente à 7kW sur un réseau électrique externe monophasé. Ce chargeur isolé comporte un étage redresseur d'entrée connecté en sortie à un étage convertisseur courant-continu - courant-continu, lui-même connecté en sortie à la batterie de traction via un étage élévateur de tension.

L'étage convertisseur courant-continu - courant-continu (ou DC/DC d'après l'anglais « Direct Current/Direct Current ») comporte lui-même :
- un onduleur connecté en entrée à l'étage redresseur d'entrée et connecté en sortie à un circuit résonnant,
- le circuit résonnant connecté à l'onduleur,
- un transformateur d'isolation galvanique intégré au circuit résonnant qui comporte en série l'enroulement primaire du transformateur, une capacité de résonance et une inductance de résonance,
- un redresseur connecté en entrée à l'enroulement secondaire du transformateur et en sortie à l'étage élévateur qui est connecté à la batterie de traction du véhicule.

Afin de limiter les pertes lors du transfert d'énergie du réseau à la batterie, les composants du circuit résonnant sont choisis de manière à ce que le transfert d'énergie au niveau du transformateur puisse se faire à la fréquence de résonance du circuit résonnant. L'onduleur est alors commandé pour produire un courant alternatif à la fréquence de résonnance. Pour cela et afin de réduire les pertes par commutation, les transistors de l'onduleur sont donc commutés à haute fréquence de sorte que leur commutation soit réalisée à tension nulle (commutation dite « ZVS » pour l'anglais « Zero Voltage Switching ») et à courant nul (commutation dite « ZCS » pour l'anglais « Current Voltage Switching »), à la fréquence de résonnance.

Ce type de chargeur isolé nécessite un appairage fin des composants du chargeur isolé et notamment du circuit résonnant, afin d'être performant et de ne pas provoquer des oscillations qui provoqueraient la destruction des transistors par recouvrement des charges dans les jonctions.

Un des buts de l'invention est de remédier à au moins une partie des inconvénients de la technique antérieure en fournissant un procédé de commande d'un chargeur isolé de batterie ainsi qu'un système de commande d'un tel chargeur, qui permettent d'améliorer la robustesse du chargeur isolé par rapport à une variation relativement importante des caractéristiques des composants de ce chargeur, dans une marge de tolérance de +/-20%, tout en étant simple à mettre en oeuvre.

A cette fin, l'invention propose un procédé de commande d'un chargeur de batterie comportant un convertisseur courant-continu-courant-continu à résonance série relié en entrée à un étage redresseur d'entrée connecté à un réseau d'alimentation alternatif, et relié en sortie à une batterie, ledit convertisseur comportant :
- un pont complet formé d'au moins deux bras de transistors, chacun desdits bras comportant un transistor haut et un transistor bas, les collecteurs des transistors hauts étant connectés au bus positif de sortie de l'étage redresseur d'entrée et les émetteurs des transistors hauts étant connectés aux extrémités respectives d'un montage série résonnant comportant un condensateur, une inductance et un enroulement primaire d'un transformateur, le collecteur de chaque transistor bas étant relié à l'émetteur du transistor haut du même bras que ledit transistor bas, et l'émetteur de chaque transistor bas étant relié au bus négatif de sortie de l'étage redresseur d'entrée,
- ledit montage série résonnant,
- ledit transformateur dont l'enroulement primaire est relié au pont complet et l'enroulement secondaire est relié à l'entrée d'un redresseur de sortie,
- des circuits d'aide à la commutation à tension nulle desdits transistors hauts et bas,
- et ledit redresseur de sortie relié en sortie à ladite batterie ledit procédé comportant :
- une étape de commande d'ouverture d'un desdits transistors hauts,
- une étape de commande de fermeture d'un desdits transistors bas du même bras que ledit un desdits transistors hauts un temps mort après ladite étape de commande d'ouverture,
caractérisé en ce que ladite étape de commande de fermeture est conditionnée à une étape de test effectuée sur l'évolution d'une estimation de la tension aux bornes dudit un desdits transistors bas pendant ledit temps mort. Lors de ladite étape de test on analyse l'évolution de ladite tension, ladite étape de commande de fermeture n'étant déclenchée que lorsqu'on détecte que ladite tension croît. Ladite étape de commande n'est déclenchée que lorsque ladite tension est en outre comprise entre un seuil bas et un seuil haut prédéterminés de tension.

Grâce à l'invention, on évite la mise en conduction d'un transistor du convertisseur courant-continu - courant-continu à un moment où la tension à ses bornes est maximale, du fait de la présence d'une oscillation de tension non désirée aux bornes de ce transistor. En effet l'inventeur a remarqué que la présence des capacités d'aide à la commutation ZVS et ZCS se trouvant en parallèle des transistors du convertisseur courant-continu - courant-continu amènent lors de la commutation, une résonance secondaire lors des temps morts entre l'ouverture d'un transistor et la fermeture d'un autre transistor du même bras. Cette résonance secondaire induit des oscillations aux bornes des transistors, si bien que la mise en conduction des transistors est susceptible de se produire à un moment où la tension à leurs bornes est maximale. Le chargeur ne fonctionne alors plus en ZVS ce qui produit des émissions électromagnétiques non désirées importantes mais aussi la génération de surtensions importantes aux bornes des interrupteurs concernés, susceptibles de détruire ces interrupteurs.

Cette mise en oeuvre de l'invention permet de limiter la durée du temps mort entre l'ouverture et la fermeture des interrupteurs ce qui optimise le rendement du chargeur isolé.

Cette caractéristique de l'invention permet de filtrer les oscillations mineures de tension et les phénomènes d'hystérésis tout en maintenant un rendement élevé du chargeur isolé.

Avantageusement ledit seuil haut est au moins inférieur à 5% de la tension maximale aux bornes dudit un desdits transistors bas en fonctionnement nominal dudit convertisseur courant-continu - courant-continu.

L'invention concerne aussi un système de charge de batterie comportant un étage redresseur d'entrée apte à être connecté à un réseau d'alimentation alternatif, un convertisseur courant-continu-courant-continu à résonance série relié en entrée audit étage redresseur d'entrée et apte à être connecté en sortie à une batterie, ledit convertisseur comportant :
- un pont complet formé d'au moins deux bras de transistors, chacun desdits bras comportant un transistor haut et un transistor bas, les collecteurs des transistors hauts étant connectés au bus positif de sortie de l'étage redresseur d'entrée et les émetteurs des transistors hauts étant connectés aux extrémités respectives d'un montage série résonnant comportant un condensateur, une inductance et un enroulement primaire d'un transformateur, le collecteur de chaque transistor bas étant relié à l'émetteur du transistor haut du même bras que ledit transistor bas, et l'émetteur de chaque transistor bas étant relié au bus négatif de sortie de l'étage redresseur d'entrée,
- ledit montage série résonnant,
- ledit transformateur dont l'enroulement primaire est relié au pont complet et l'enroulement secondaire est relié à l'entrée d'un redresseur de sortie,
- des circuits d'aide à la commutation à tension nulle desdits transistors hauts et bas,
- et ledit redresseur de sortie apte à être connecté en sortie à ladite batterie, ledit système comportant :
- des moyens de commande d'ouverture de chaque transistor haut,
- des moyens de commande de fermeture de chaque transistor bas un temps mort après l'ouverture du transistor haut du même bras,
caractérisé en ce qu'il comporte des moyens de déclenchement desdits moyens de commande de fermeture, en fonction de l'évolution d'une estimation de la tension aux bornes du transistor bas correspondant pendant ledit temps mort.

Lesdits moyens de déclenchement du système de charge selon l'invention comportent des moyens de détection d'une augmentation de ladite tension, lesdits moyens de déclenchement étant activés par lesdits moyens de détection. Autrement dit lesdits moyens de déclenchement sont aptes à activer la fermeture du transistor bas seulement lorsque ladite tension croît.

Lesdits moyens de déclenchement sont activés par lesdits moyens de détection seulement lorsque ladite tension est comprise entre un seuil bas et un seuil haut prédéterminés de tension. Le seuil haut est avantageusement au moins inférieur à 5% de la tension maximale aux bornes du transistor bas en fonctionnement nominal du convertisseur courant-continu - courant-continu.

L'invention concerne encore un programme d'ordinateur comportant des instructions pour mettre en oeuvre le procédé de commande d'un chargeur de batterie selon l'invention, lorsqu'il est exécuté sur un ou plusieurs processeurs.

Le système de charge selon l'invention et le programme d'ordinateur selon l'invention présentent des avantages analogues à ceux du procédé de commande selon l'invention.

D'autres caractéristiques et avantages apparaîtront à la lecture d'un mode de réalisation préféré décrit en référence aux figures dans lesquelles :
- la figure 1 représente un système de charge selon l'invention, dans ce mode de réalisation préféré,
- la figure 2 représente la commande d'un système de charge de même topologie mais n'implémentant pas l'invention,
- la figure 3 représente la commande du système de charge selon l'invention, dans ce mode de réalisation préféré,
- la figure 4 représente des étapes du procédé de commande selon l'invention,
- et la figure 5 représente des signaux de commande du système de charge selon l'invention, dans ce mode de réalisation préféré.

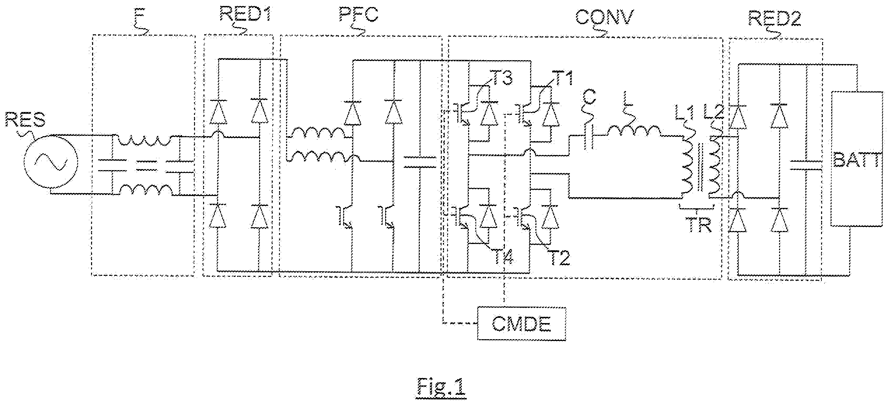

Selon un mode de réalisation préféré de l'invention représenté à la **figure 1****,** le système de charge selon l'invention comporte :
- un étage redresseur d'entrée apte à être connecté à un réseau d'alimentation RES monophasé,
- un convertisseur courant-continu - courant-continu CONV connecté en entrée à l'étage redresseur d'entrée,
- et un redresseur de sortie RED2 relié en entrée au convertisseur convertisseur courant-continu - courant-continu CONV, et apte à être connecté en sortie à une batterie BATT, ici une batterie de traction de véhicule électrique ou hybride de tension nominale de l'ordre de 400V (volts).

L'étage redresseur d'entrée comporte :
- un filtre F de compatibilité électromagnétique que l'on connecte au réseau monophasé RES,
- un redresseur RED1 composé d'un pont de diodes, générant une tension continue à partir de la tension délivrée par le réseau d'alimentation et filtrée par le filtre F,
- et un étage PFC de correction de facteur de puissance connecté en entrée au redresseur RED1 et en sortie à l'entrée du convertisseur CONV ; cet étage PFC assure l'absorption d'un courant sinusoïdal sur le réseau RES et est formé de deux bras élévateurs de tension connectés en parallèle à une capacité de lissage de sortie de l'étage PFC de correction de facteur de puissance.

Le convertisseur courant-continu - courant-continu CONV comporte :
- un pont complet formé de deux bras de transistors, un premier bras comportant un transistor haut T3 et un transistor bas T4, un deuxième bras comportant un transistor haut T1 et un transistor bas T2 ; les collecteurs des transistors hauts T3 et T1 sont connectés au bus positif de tension continu à la sortie de l'étage PFC de correction du facteur de puissance ; les émetteurs des transistors bas T4 et T2 sont connectés au bus négatif de sortie de l'étage PFC de correction du facteur de puissance ;
- un circuit de résonance série connecté en une première extrémité au point milieu du premier bras, c'est-à-dire au point de connexion entre l'émetteur du transistor T3 et le collecteur du transistor T4, et en une deuxième extrémité au point milieu du deuxième bras, c'est-à-dire au point de connexion entre l'émetteur du transistor T1 et le collecteur du transistor T2 ;
- un transformateur TR dont l'enroulement primaire L1 est relié au pont complet et l'enroulement secondaire L2 est relié à l'entrée d'un redresseur de sortie RED2 ;
- et le redresseur de sortie RED2 composé d'un pont de diodes et d'une capacité de lissage de sortie, que l'on connecte en parallèle de la batterie BATT. Les points milieux des deux bras du pont de diodes sont chacun connectés à une extrémité différente de l'enroulement secondaire L2 du transformateur TR.

Le circuit de résonance série comporte, connectés en série, un condensateur C, une inductance L et l'enroulement primaire L1 du transformateur TR.

De plus, des diodes de roue libre sont connectées en parallèle de chaque transistor T1, T2, T3 et T4. Les transistors T1, T2, T3 et T4 sont également équipés de circuits d'aide à la commutation ZVS et ZCS tels que des dipoles composés de capacités montées en série avec des résistances dits « snuber » en parallèle de chaque transistor T1, T2, T3 et T4 (non représentées).

Le système de charge selon l'invention comporte également des moyens de commande CMDE intégrés par exemple dans une carte électronique, des transistors T1 à T4.

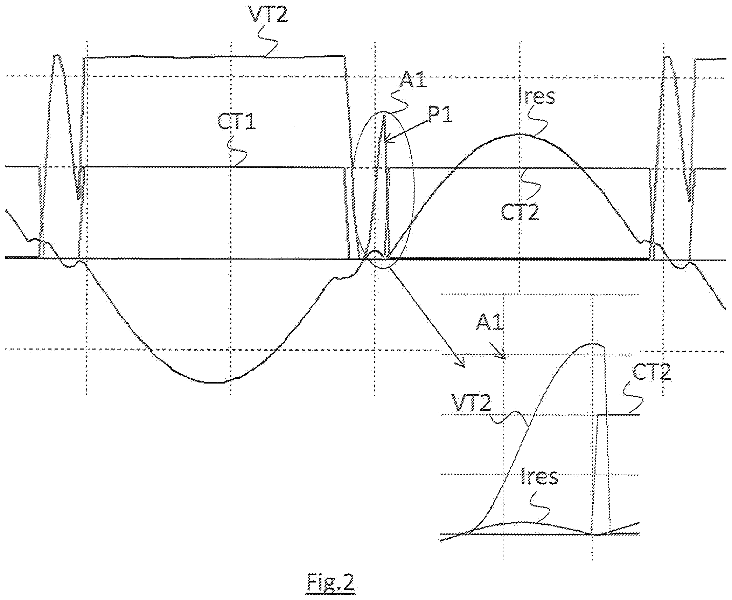

En référence à la **figure 2****,** le courant Ires circulant dans la bobine L du convertisseur courant-continu - courant-continu CONV, le signal de commande CT1 du transistor T1, le signal de commande CT2 du transistor T2 ainsi que la tension VT2 aux bornes du transistor T2 sont représentés sur un même axe temporel lorsque le procédé de commande selon l'invention n'est pas mis en oeuvre.

Lorsque le signal de commande CT1 est à sa valeur haute, le transistor T1 est fermé et le transistor T2 est ouvert. Aux bornes du transistor T2, la tension VT2 forme alors un créneau de tension qui décroît rapidement immédiatement après l'ouverture du transistor T1, lorsque le signal de commande CT1 passe à sa valeur nulle. Or cette décroissance est suivie d'un pic secondaire de résonance P1 observable plus précisément sur l'agrandissement A1 d'une partie de la **figure 2****.** On voit que le signal de commande CT2 du transistor T2 commande la fermeture de celui-ci en passant à sa valeur haute à un instant où la tension VT2 est presque au sommet de son pic de résonance secondaire P1, ce qui fait que le système de charge ne fonctionne plus en ZVS. D'autres pics de résonance sont visibles sur cette **figure 2****,** puisqu'ils apparaissent lors des temps morts entre la commutation d'un transistor et celle de l'autre transistor du même bras.

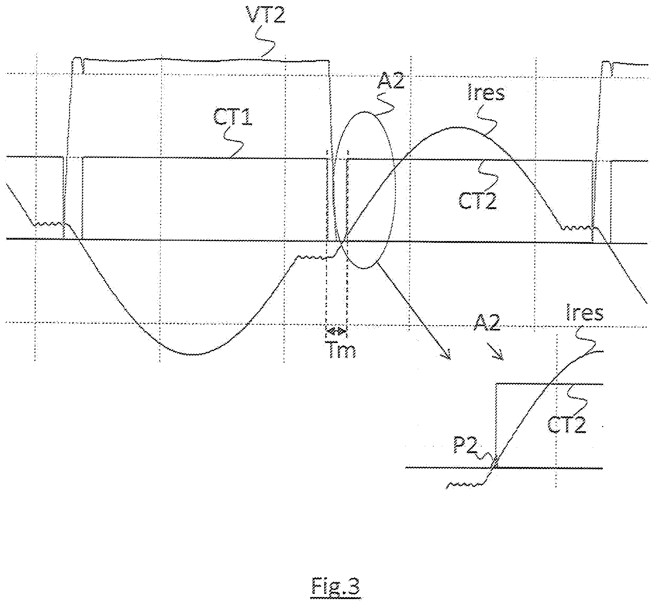

En référence à la **figure 3****,** le courant Ires circulant dans la bobine L du convertisseur courant-continu - courant-continu CONV, le signal de commande CT1 du transistor T1, le signal de commande CT2 du transistor T2 ainsi que la tension VT2 aux bornes du transistor T2 sont représentés sur un même axe temporel lorsque le procédé de commande selon l'invention est mis en oeuvre.

Sur cette **figure 3****,** la tension VT2 aux bornes du transistor T2 décroît rapidement juste après l'ouverture du transistor T1, lors du temps mort Tm entre l'ouverture du transistor T1 et la fermeture du transistor T2. L'évolution de la tension VT2 aux bornes du transistor T2 est montrée plus précisément sur l'agrandissement A2 de cette partie de la **figure 3****.** Lors du temps mort Tm, la résonance secondaire P2 de la tension VT2 aux bornes du transistor T2 est beaucoup plus faible que le pic de résonance secondaire P1 de la **figure 2****.** En effet la fermeture du transistor T2 est effectuée au début de la montée de la tension VT2 lors de cette résonance secondaire P2. Cette stratégie de commutation inhibe donc la résonance secondaire P2 puisque la valeur de la tension VT2 passe à une valeur nulle lors de la fermeture du transistor T2 donc bien avant que la résonance secondaire n'atteigne un pic de résonance. L'invention permet donc le fonctionnement du système de charge en ZCS et ZVS en dépit des phénomènes de résonance secondaire dus aux circuits d'aide à la commutation.

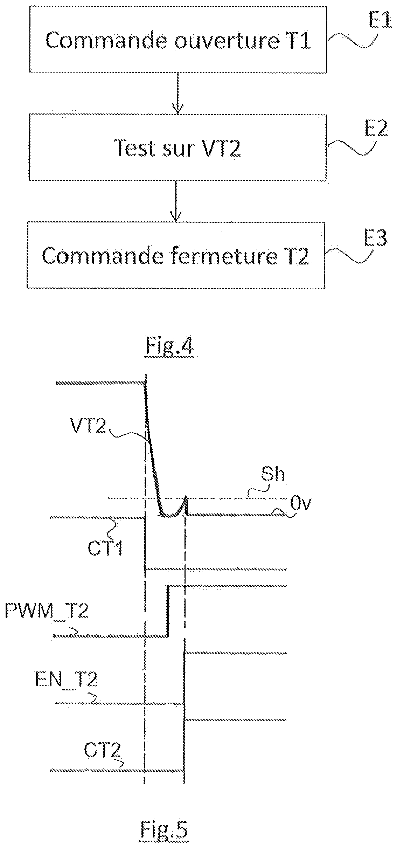

Le procédé de commande selon l'invention est maintenant représenté sous la forme d'un algorithme comportant des étapes E1 à E3 représentées sur la **figure 4****.**

Le procédé est mis en oeuvre dans les moyens électroniques de commande CMDE.

L'étape E1 est la commande de l'ouverture d'un transistor haut du système de charge selon l'invention, dans cet exemple le transistor T1. Cette étape correspond à la mise à zéro du signal de commande CT1 du transistor T1, visible sur la **figure 5****.**

L'étape suivante E2 est une étape de test effectuée sur un signal de mesure de la tension VT2 aux bornes du transistor bas T2. Dans cette étape on supervise l'évolution de la tension VT2 en calculant la différence entre la tension VT2 mesurée à un instant t et la précédente mesure de la tension VT2 à un instant précédent t-1. Lorsque cette différence est positive, on vérifie de plus que la tension VT2 est comprise entre un seuil bas de 0 V par exemple et un seuil haut Sh nettement inférieur à la valeur maximale de la tension VT2 lors du fonctionnement nominal du système de charge selon l'invention. Ce seuil haut Sh est fixé par exemple à 5% de la tension maximale aux bornes du transistor T2 en fonctionnement nominal.

Si ces conditions sont vérifiées, c'est-à-dire si le signal de mesure de la tension VT2 est compris entre le seuil bas et le seuil haut Sh, et si la dérivée de ce signal est positive, alors un signal EN_T2 d'autorisation de fermeture du transistor T2 est mis à une valeur haute.

Lorsque le signal EN_T2 est à sa valeur haute et qu'un signal de pilotage PWM_T2 du transistor T2 est également à sa valeur haute, alors on passe à l'étape suivante E3. Le signal de pilotage PWM-T2 assure l'existence d'un temps mort minimal entre la commutation des interrupteurs d'un même bras, et la réalisation du rapport cyclique de commande du transistor T2.

L'étape suivante E3 est la commande de la fermeture du transistor T2, correspondant à la mise à sa valeur haute du signal de commande CT2 du transistor T2.

Il est à noter que ces étapes sont reprises de manière symétrique sur l'autre bras du pont. A l'ouverture du transistor T3 on attend que la tension aux bornes du transistor T4 soit croissante et comprise entre le seuil bas de 0 V et le seuil haut Sh avant d'autoriser la fermeture du transistor T4.

Il est à noter que bien que dans ce mode de réalisation le système de charge utilise un réseau d'alimentation monophasé, l'invention est également utilisable sur un système de charge utilisant un convertisseur courant-continu - courant-continu à résonance série fonctionnant en ZVS et ZCS mais utilisant un réseau d'alimentation triphasé. En effet dans une telle variante de réalisation il suffit d'utiliser un pont redresseur à trois bras dans l'étage redresseur d'entrée, plutôt que d'utiliser un pont redresseur à deux bras. De même l'invention est également réalisable sur des topologies légèrement différentes de celle décrite dans ce mode de réalisation. En effet l'étage de correction de facteur de puissance ou le filtre de compatibilité électromagnétique en entrée du système de charge ne sont pas nécessaires à la mise en oeuvre et au fonctionnement de l'invention, bien que leur présence soit préférable pour obéir aux normes de connexion réseau. De même les capacités de lissage du système de charge ne sont pas essentielles à la réalisation de l'invention.

## Revendications

1. Procédé de commande d'un chargeur de batterie (BATT) comportant un convertisseur (CONV) courant-continu-courant-continu à résonance série relié en entrée à un étage redresseur d'entrée connecté à un réseau (RES) d'alimentation alternatif, et relié en sortie à une batterie (BATT), ledit convertisseur (CONV) comportant :
- un pont complet formé d'au moins deux bras de transistors, chacun desdits bras comportant un transistor haut (T3, T1) et un transistor bas (T4, T2), les collecteurs des transistors hauts (T3, T1) étant connectés au bus positif de sortie de l'étage redresseur d'entrée et les émetteurs des transistors hauts (T3, T1) étant connectés aux extrémités respectives d'un montage série résonnant comportant un condensateur (C), une inductance (L) et un enroulement primaire (L1) d'un transformateur (TR), le collecteur de chaque transistor bas (T4, T2) étant relié à l'émetteur du transistor haut (T3, T1) du même bras que ledit transistor bas (T4, T2), et l'émetteur de chaque transistor bas (T4, T2) étant relié au bus négatif de sortie de l'étage redresseur d'entrée,
- ledit montage série résonnant,
- ledit transformateur (TR) dont l'enroulement primaire (L1) est relié au pont complet et l'enroulement secondaire (L2) est relié à l'entrée d'un redresseur de sortie (RED2),
- des circuits d'aide à la commutation à tension nulle desdits transistors hauts (T3, T1) et bas (T4, T2),
- et ledit redresseur de sortie (RED2) relié en sortie à ladite batterie (BATT), ledit procédé comportant :
- une étape (E1) de commande d'ouverture d'un desdits transistors hauts (T1),
- une étape (E3) de commande de fermeture d'un desdits transistors bas (T2) du même bras que ledit un desdits transistors hauts un temps mort (Tm) après ladite étape (E1) de commande d'ouverture,
**caractérisé en ce que** ladite étape (E3) de commande de fermeture est conditionnée à une étape de test (E2) effectuée sur l'évolution d'une estimation de la tension (VT2) aux bornes dudit un desdits transistors bas (T2) pendant ledit temps mort (Tm), et lors de ladite étape (E2) de test on analyse l'évolution de ladite tension (VT2), ladite étape (E3) de commande de fermeture n'étant déclenchée que lorsqu'on détecte que ladite tension (VT2) croît et lorsque ladite tension (VT2) est en outre comprise entre un seuil bas et un seuil haut (Sh) prédéterminés de tension.

2. Procédé de commande selon la revendication 1, dans lequel ledit seuil haut (Sh) est au moins inférieur à 5% de la tension maximale aux bornes dudit un desdits transistors bas (T2) en fonctionnement nominal dudit convertisseur (CONV) courant-continu - courant-continu.

3. Système de charge de batterie (BATT) comportant un étage redresseur d'entrée apte à être connecté à un réseau (RES) d'alimentation alternatif, un convertisseur (CONV) courant-continu-courant-continu à résonance série relié en entrée audit étage redresseur d'entrée et apte à être connecté en sortie à une batterie (BATT), ledit convertisseur (CONV) comportant :
- un pont complet formé d'au moins deux bras de transistors, chacun desdits bras comportant un transistor haut (T3, T1) et un transistor bas (T4, T2), les collecteurs des transistors hauts (T3, T1) étant connectés au bus positif de sortie de l'étage redresseur d'entrée et les émetteurs des transistors hauts (T3, T1) étant connectés aux extrémités respectives d'un montage série résonnant comportant un condensateur (C), une inductance (L) et un enroulement primaire (L1) d'un transformateur (TR), le collecteur de chaque transistor bas (T4, T2) étant relié à l'émetteur du transistor haut (T3, T1) du même bras que ledit transistor bas (T4, T2), et l'émetteur de chaque transistor bas (T4, T2) étant relié au bus négatif de sortie de l'étage redresseur d'entrée,
- ledit montage série résonnant,
- ledit transformateur (TR) dont l'enroulement primaire (L1) est relié au pont complet et l'enroulement secondaire (L2) est relié à l'entrée d'un redresseur de sortie (RED2),
- des circuits d'aide à la commutation à tension nulle desdits transistors hauts (T3, T1) et bas (T4, T2),
- et ledit redresseur de sortie (RED2) apte à être connecté en sortie à ladite batterie (BATT),
ledit système comportant :
- des moyens de commande d'ouverture de chaque transistor haut (T3, T1),
- des moyens de commande de fermeture de chaque transistor bas (T4, T2) un temps mort (Tm) après l'ouverture du transistor haut (T3, T1) du même bras,
**caractérisé en ce qu'**il comporte des moyens de déclenchement desdits moyens de commande de fermeture, en fonction de l'évolution d'une estimation de la tension (VT2) aux bornes du transistor bas (T2) correspondant pendant ledit temps mort (Tm), lesdits moyens de déclenchement comportant des moyens de détection d'une augmentation de ladite tension (VT2), lesdits moyens de déclenchement étant activés par lesdits moyens de détection seulement lorsque ladite tension (VT2) est comprise entre un seuil bas et un seuil haut (Sh) prédéterminés de tension.

4. Système de charge selon la revendication 3, dans lequel ledit seuil haut (Sh) est au moins inférieur à 5% de la tension maximale aux bornes dudit transistor bas (T2) en fonctionnement nominal dudit convertisseur (CONV) courant-continu - courant-continu.

5. Programme d'ordinateur comportant des instructions pour mettre en oeuvre le procédé de commande d'un chargeur de batterie (BATT) selon l'une quelconque des revendications 1 à 2, lorsqu'il est exécuté sur un ou plusieurs processeurs.

## Patentansprüche

1. Verfahren zum Steuern eines Batterieladegeräts (BATT), das einen Gleichstrom-Gleichstrom-Reihenresonanzwandler (CONV) aufweist, der am Eingang mit einer an ein WechselstromVersorgungsnetz (RES) angeschlossenen Eingangsgleichrichterstufe und am Ausgang mit einer Batterie (BATT) verbunden ist, wobei der Wandler (CONV) aufweist:
- eine Vollbrücke, die von mindestens zwei Transistorzweigen gebildet wird, wobei jeder der Zweige einen oberen Transistor (T3, T1) und einen unteren Transistor (T4, T2) aufweist, wobei die Kollektoren der oberen Transistoren (T3, T1) an den positiven Ausgangsbus der Eingangsgleichrichterstufe und die Emitter der oberen Transistoren (T3, T1) an die jeweiligen Enden einer Resonanzreihenschaltung angeschlossen sind, die einen Kondensator (C), eine Induktivität (L) und eine Primärwicklung (L1) eines Transformators (TR) aufweist, wobei der Kollektor jedes unteren Transistors (T4, T2) mit dem Emitter des oberen Transistors (T3, T1) des gleichen Zweigs wie der untere Transistor (T4, T2) verbunden ist, und der Emitter jedes unteren Transistors (T4, T2) mit dem negativen Ausgangsbus der Eingangsgleichrichterstufe verbunden ist,
- die Resonanzreihenschaltung,
- den Transformator (TR), dessen Primärwicklung (L1) mit der Vollbrücke und dessen Sekundärwicklung (L2) mit dem Eingang eines Ausgangsgleichrichters (RED2) verbunden ist,
- Hilfsschaltungen der Nullspannungsumschaltung der oberen (T3, T1) und unteren Transistoren (T4, T2),
- und den Ausgangsgleichrichter (RED2), der am Ausgang mit der Batterie (BATT) verbunden ist,
wobei das Verfahren aufweist:
- einen Schritt (E1) der Öffnungssteuerung eines der oberen Transistoren (T1,
- einen Schritt (E3) der Schließsteuerung eines der unteren Transistoren (T2) des gleichen Zweigs wie der eine der oberen Transistoren eine Totzeit (Tm) nach dem Schritt (E1) der Öffnungssteuerung,
**dadurch gekennzeichnet, dass** der Schritt (E3) der Schließsteuerung von einem Testschritt (E2) abhängt, der an der Entwicklung einer Schätzung der Spannung (VT2) an den Klemmen eines der unteren Transistoren (T2) während der Totzeit (Tm) ausgeführt wird, und während des Testschritts (E2) die Entwicklung der Spannung (VT2) analysiert wird, wobei der Schritt (E3) der Schließsteuerung nur ausgelöst wird, wenn erfasst wird, dass die Spannung (VT2) steigt und wenn die Spannung (VT2) außerdem zwischen einer vorbestimmten unteren Spannungsschwelle und oberen Spannungsschwelle (Sh) liegt.

2. Steuerverfahren nach Anspruch 1, wobei die obere Schwelle (Sh) mindestens niedriger als 5% der maximalen Spannung an den Klemmen eines der unteren Transistoren (T2) im Nennbetrieb des Gleichstrom-Gleichstrom-Wandlers (CONV) ist.

3. Batterieladesystem (BATT), das eine Eingangsgleichrichterstufe, die an ein Wechselstromversorgungsnetz (RES) angeschlossen werden kann, und einen Gleichstrom-Gleichstrom-Reihenresonanzwandler (CONV) aufweist, der am Eingang mit der Eingangsgleichrichterstufe verbunden ist und am Ausgang an eine Batterie (BATT) angeschlossen werden kann, wobei der Wandler (CONV) aufweist:
- eine Vollbrücke, die von mindestens zwei Transistorzweigen gebildet wird, wobei jeder der Zweige einen oberen Transistor (T3, T1) und einen unteren Transistor (T4, T2) aufweist, wobei die Kollektoren der oberen Transistoren (T3, T1) an den positiven Ausgangsbus der Eingangsgleichrichterstufe und die Emitter der oberen Transistoren (T3, T1) an die jeweiligen Enden einer Resonanzreihenschaltung angeschlossen sind, die einen Kondensator (C), eine Induktivität (L) und eine Primärwicklung (L1) eines Transformators (TR) aufweist, wobei der Kollektor jedes unteren Transistors (T4, T2) mit dem Emitter des oberen Transistors (T3, T1) des gleichen Zweigs wie der untere Transistor (T4, T2) verbunden ist, und der Emitter jedes unteren Transistors (T4, T2) mit dem negativen Ausgangsbus der Eingangsgleichrichterstufe verbunden ist,
- die Resonanzreihenschaltung,
- den Transformator (TR), dessen Primärwicklung (L1) mit der Vollbrücke verbunden und dessen Sekundärwicklung (L2) mit dem Eingang eines Ausgangsgleichrichters (RED2) verbunden ist,
- Hilfsschaltungen der Nullspannungsumschaltung der Transistoren (T3, T1) und unteren Transistoren (T4, T2),
- und den Ausgangsgleichrichter (RED2), der am Ausgang an die Batterie (BATT) angeschlossen werden kann,
wobei das System aufweist:
- Einrichtungen zur Öffnungssteuerung jedes oberen Transistors (T3, T1),
- Einrichtungen zur Schließsteuerung jedes unteren Transistors (T4, T2) eine Totzeit (Tm) nach der Öffnung des oberen Transistors (T3, T1) des gleichen Zweigs,
**dadurch gekennzeichnet, dass** es Einrichtungen zur Auslösung der Einrichtungen zur Schließsteuerung abhängig von der Entwicklung einer Schätzung der Spannung (VT2) an den Klemmen des entsprechenden unteren Transistors (T2) während der Totzeit (Tm) aufweist, wobei die Auslöseeinrichtungen Einrichtungen zur Erfassung einer Erhöhung der Spannung (VT2) aufweisen, wobei die Auslöseeinrichtungen von den Erfassungseinrichtungen nur dann aktiviert werden, wenn die Spannung (VT2) zwischen einer vorbestimmten unteren und oberen Spannungsschwelle (Sh) liegt.

4. Ladesystem nach Anspruch 3, wobei die obere Schwelle (Sh) mindestens niedriger als 5% der maximalen Spannung an den Klemmen des unteren Transistors (T2) im Nennbetrieb des Gleichstrom-Gleichstrom-Wandlers (CONV) ist.

5. Computerprogramm, das Anweisungen aufweist, um das Steuerverfahren eines Batterieladegeräts (BATT) nach einem der Ansprüche 1 bis 2 durchzuführen, wenn es auf einem oder mehreren Prozessoren ausgeführt wird.

## Claims

1. Method for controlling a battery charger (BATT) comprising a series resonance DC-DC converter (CONV) connected at its input to an input rectifier stage connected to an AC power supply network (RES), and connected at its output to a battery (BATT), said converter (CONV) comprising:
- a full bridge composed of at least two transistor arms, each of said arms comprising a top transistor (T3, T1) and a bottom transistor (T4, T2), the collectors of the top transistors (T3, T1) being connected to the positive output bus of the input rectifier stage and the emitters of the top transistors (T3, T1) being connected to the respective ends of a series resonant circuit comprising a capacitor (C), an inductor (L) and a primary winding (L1) of a transformer (TR), the collector of each bottom transistor (T4, T2) being connected to the emitter of the top transistor (T3, T1) in the same arm as said bottom transistor (T4, T2), and the emitter of each bottom transistor (T4, T2) being connected to the negative output bus of the input rectifier stage,
- said series resonant circuit,
- said transformer (TR) whose primary winding (L1) is connected to the full bridge and whose secondary winding (L2) is connected to the input of an output rectifier (RED2),
- circuits to aid the switching at zero voltage of said top (T3, T1) and bottom (T4, T2) transistors,
- and said output rectifier (RED2) connected at its output to said battery (BATT)
said method comprising:
- a step (E1) for controlling the opening of one of said top transistors (T1),
- a step (E3) for controlling the closing of one of said bottom transistors (T2) in the same arm as said one of said top transistors a dead time (Tm) after said step (E1) for controlling the opening,
**characterized in that** said step (E3) for controlling the closing is conditioned to a test step (E2) carried out on the time variation of an estimation of the voltage (VT2) across the terminals of said one of said bottom transistors (T2) during said dead time (Tm), and during said test step (E2), the time variation of said voltage (VT2) is analyzed, said step for controlling the closing (E3) only being triggered when said voltage (VT2) is detected to be increasing and when said voltage (VT2) is furthermore in the range between a predetermined low voltage threshold and high voltage threshold (Sh).

2. Control method according to Claim 1, in which said high threshold (Sh) is at least less than 5% of the maximum voltage across the terminals of said one of said bottom transistors (T2) in nominal operation of said DC-DC converter (CONV).

3. Battery charging system (BATT) comprising an input rectifier stage able to be connected to an AC power supply network (RES), a series resonance DC-DC converter (CONV) connected to the input of said input rectifier stage and able to be connected at its output to a battery (BATT), said converter (CONV) comprising:
- a full bridge composed of at least two transistor arms, each of said arms comprising a top transistor (T3, T1) and a bottom transistor (T4, T2), the collectors of the top transistors (T3, T1) being connected to the positive output bus of the input rectifier stage and the emitters of the top transistors (T3, T1) being connected to the respective ends of a series resonant circuit comprising a capacitor (C), an inductor (L) and a primary winding (L1) of a transformer (TR), the collector of each bottom transistor (T4, T2) being connected to the emitter of the top transistor (T3, T1) in the same arm as said bottom transistor (T4, T2), and the emitter of each bottom transistor (T4, T2) being connected to the negative output bus of the input rectifier stage,
- said series resonant circuit,
- said transformer (TR) whose primary winding (L1) is connected to the full bridge and whose secondary winding (L2) is connected to the input of an output rectifier (RED2),
- circuits to aid the switching at zero voltage of said top (T3, T1) and bottom (T4, T2) transistors,
- and said output rectifier (RED2) able to be connected at its output to said battery (BATT),
said system comprising:
- means for controlling the opening of each top transistor (T3, T1),
- means for controlling the closing of each bottom transistor (T4, T2) a dead time (Tm) after the opening of the top transistor (T3, T1) in the same arm,
**characterized in that** it comprises means for triggering said closing control means, depending on the time variation of an estimation of the voltage (VT2) across the terminals of the corresponding bottom transistor (T2) during said dead time (Tm), said triggering means comprising means for detecting an increase of said voltage (VT2), said triggering means being activated by said detection means only when said voltage (VT2) is in the range between a predetermined low voltage threshold and high voltage threshold (Sh).

4. Charging system according to Claim 3, in which said high threshold (Sh) is at least less than 5% of the maximum voltage across the terminals of said bottom transistor (T2) in nominal operation of said DC-DC converter (CONV).

5. Computer program comprising instructions for implementing the method for controlling a battery charger (BATT) according to either one of Claims 1 and 2, when it is executed on one or more processors.
